# EUROPEAN PATENT APPLICATION

(11) **EP 4 422 234 A1**
(43) Date of publication of application: **28.08.2024**
(21) Application number: 23305232.3
(22) Date of filing: 22.02.2023
(51) Int. Cl.: H04W 12/00, H04L 9/40, H04W 12/63, H04L 9/32, G06Q 20/20

(54) **METHOD TO REINFORCE THE SECURITY OF A TRANSACTION**

(71) Applicant: THALES DIS FRANCE SAS, 92190 Meudon (FR)
(72) Inventor: HUGOT, Didier, 92350 LE PLESSIS ROBINSON (FR)
(74) Representative: Quintero Romero, Manuel

(57) **Abstract**

The present invention provides a method to reinforce the security of a conventional transaction performed by a Short-Range (SR) communication-enabled chip card, wherein the chip card is paired with at least one SR communication-enabled handset, the method comprising the steps of:
initiating the conventional transaction between the chip card and a reader;
wherein the method is characterized in that:
sending, by the chip card, an authentication request to at least one of the at least one paired handsets over an established Short-Range (SR) communication channel;
receiving, by a paired handset, the authentication request and computing an authentication result granting or refusing the transaction;
sending, by the handset, an authentication response to the chip card over the established channel, the authentication response comprising the authentication result; and
continuing or stopping, by the chip card, the conventional transaction with the reader depending on the authentication result.

## Description

### TECHNICAL FIELD

The present invention relates to the technical field of secure transactions and, namely, to the field of multi-factor authentication in chip card-based transactions.

More particularly, the present invention reinforces the security of chip card-based transactions by adding a user-friendly strong authentication factor.

### BACKGROUND OF THE INVENTION

Today there is an intensive use of chip cards (so-called smart cards) for authorizing a colorful set of different transactions: conducting payments, withdrawing money, granting access to physically or digitally restricted sites, authenticating yourself to websites, digitally signing files, etc.

Briefly, the chip contains in a tamper-resistant manner sensitive information associated to the cardholder such as personal information, identifier(s), and/or keys which are used to successfully perform the desired transactions. To accomplish that, the chip cards also contain application(s) that performs specific tasks when running. Thus, the chip cards are able to interface in a contact or contactless manner external readers by following pre-defined protocols. During manufacturing, the chip are equipped and loaded with the needed applications and interface protocols. Afterwards, the manufactured chip cards are personalized by provisioning the cardholder sensitive information or profiles.

As chip cards are targeting more use cases every day, data access and theft, chip card misuse, impersonation, etc. becomes increasingly important. This security concern has resulted in applying multi-factor authentication techniques by requiring, e.g., a PIN code, a password, a One-Time-Passcode (OTP), etc. during the transaction as a mandatory verification step. On top of that, in this complex ecosystem, users are keen for frictionless processes such as Single-Sign-On logins, paswordless solutions, etc. sometimes misaligned with this security strengthening sought by the industry.

Obviously, attacks also evolves and quickly adapts to cutting-edge security layers leveraging, for instance, user absentmindedness and hence posing a real security risk in multiple situations. Hereinbelow are three exemplifying situations.
1. Regarding Automatic Teller Machine (ATM) scams: ATMs are equipped by scammers to steal banking cards with a camera recording the PIN code. With both the banking card and the PIN code, the scammers can then withdraw cash and make in-store payments.
2. Regarding computer security: Public Key Infrastructure (PKI) certificate-based smart cards provide a high level of assurance of the identity of the user attempting to gain logical access to a network. These are bringing additional computer security to secure many services such as login into a Windows session, signing or encrypting emails and documents, authenticating to web applications, connecting to VPN, etc. Once inserted into the computer, the user is asked to enter a PIN code, which remains valid until the smartcard is removed. This scenario represents an issue when the user leaves the computer unattended without removing the smartcard since any other person can then take advantage of this "unlocked" computer to impersonate the genuine user.
3. Regarding in-store payments: when the payment card is inserted into the terminal (e.g., any type of Point-Of-Sale, POS, terminal), the only security relies on entering a PIN code which, moreover, in some countries is not even required, or can be susceptible of shoulder surfing attacks. A malicious person can then used a stolen or lost card to perform in-store payments.

Thus, there is a need in the industry for a universal seamlessly solution that guarantees secure transactions in any existing and upcoming use cases.

### SUMMARY OF THE INVENTION

The present invention provides a solution for the aforementioned problems by a method for reinforcing the security of a conventional transaction according to claim 1, a system according to claim 13, a SR communication-enabled chip card according to claim 14, and a SR communication-enabled handset according to claim 15. In dependent claims, preferred embodiments of the invention are defined.

The present invention aims at reinforcing the security of a conventional transaction by adding a strong authentication factor (i.e., user's handset) to the already existing strong authenticator factor represented by the chip card. To this end, both the handset and the chip card are pairing-allowed Short-Range communication-enabled devices and, advantageously, the communication protocol between the reader (e.g., ATM, POS, computer) and the chip card remains unchanged (hence, the term "conventional" transaction).

Collaterally, the invention makes the fewest technical changes to the associated hardware or software infrastructure currently deployed and is as cost-effective as possible.

Therefore, in a first inventive aspect, the invention provides a method to reinforce the security of a conventional transaction performed by a Short-Range (SR) communication-enabled chip card, wherein the chip card is paired with at least one SR communication-enabled handset, the method comprising the steps of:
- initiating the conventional transaction between the chip card and a reader;
wherein the method is characterized in that:
- sending, by the chip card, an authentication request to at least one of the at least one paired handsets over an established Short-Range (SR) communication channel;
- receiving, by a paired handset, the authentication request and computing an authentication result granting or refusing the transaction;
- sending, by the handset, an authentication response to the chip card over the established channel, the authentication response comprising the authentication result; and
- continuing or stopping, by the chip card, the conventional transaction with the reader depending on the authentication result.

The chip card is configured, on one side, to interface the reader using a conventional communication protocol (e.g., ISO/IEC standard 7816, 14443, and/or 18092). On the other side, it is configured to communicate wirelessly with the user's handset over a SR communication channel. This second communication takes place via Bluetooth, Bluetooth Low Energy (BLE), Wi-Fi, Ultra high frequency (UHF), Near-field communication (NFC), or Li-Fi.

Preferably, there is a contact-based communication between chip card and the reader (e.g., following ISO/IEC 7816 standard) and the communication with the handset is via BLE (i.e., both the chip card and handset are BLE-enabled devices). More preferably, chip card dimensions are similar to those of a payment card: ID-1 of the ISO/IEC 7810 standard (85.60 × 53.98 millimeters, or 3.37 in × 2.13 in).

The chip of the chip card stores an application (e.g., applet) for carrying out the pairing and subsequent communication with the handset. As mentioned, if the authentication result is negative (i.e., the transaction is refused) this application is configured to override the ongoing transaction. Otherwise (i.e., if transaction is granted), the chip card application does not intervene in the ongoing transaction.

Similarly, the handset (e.g., a smartphone, tablet, or wearable electronic accessory) may comprise one or more memories such as volatile and/or non-volatile memories which store data, such as an ID(s) relating to the handset or hosted chip, that allows identifying uniquely and addressing the handset. The memory(ies) also stores the Operating System (OS) and applications which are adapted to provide services to the user. Among these applications, the handset has an installed application that enables the pairing and subsequent communication with the chip card over the SR communication channel. Additionally, the handset may be configured to send information over another communication network to backend services at server end. In particular, applications and the backend infrastructure may communicate via one or more Application Program Interfaces, APIs, using HTTP over TLS. In a preferred embodiment, the handset is a smartphone belonging to the cardholder, e.g., his personal or professional smartphone.

As mentioned, the chip card sends an authentication request to at least one handset over an established Short-Range (SR) communication channel. Then, first, the chip card and the handset need to be paired. And, second, the paired handset(s) need to be locally present to "automatically" or "actively" authorize the ongoing transaction.

For the pairing, in a particular embodiment, the user launches an execution of the handset application (e.g., app or web type browser) and logs in to his account. For instance, for banking and payment type transactions, this app may be the bank or issuer app; while this handset-based additional strong authentication factor feature is integrated e.g., as a Software Development Kit (SDK).

The handset application activates and uses its e.g., NFC capabilities to start detecting neighbouring devices and prompts the user to tap the chip card onto the handset. This produces a chip card - handset exchange of information (e.g., identifiers) and initial pairing requests. Depending on the technology, this session initiation results in a different key-agreement protocol.

For instance, in an embodiment, both devices generates a shared secret to establish a temporary e.g., NFC-based secure session until respective public keys (or certificates) from their key pairs are securely exchanged. Alternatively, the handset may prompt the user to submit pairing authentication data that the handset forwards to backend services in order to successfully authorize the pairing. This pairing authentication data requested to the user can be either the PIN card, or another passcode communicated out-of-bound to the card holder.

Once paired, a powered-up chip card can establish a SR and secure end-to-end communication with the device. This stable communication channel is preferably via BLE. As mentioned, one or several handsets may be paired with the chip card by following the same procedure. Preferably, the handset application stores (or lets store e.g., in a backend database) the different already paired handsets.

Therefore, during the transaction, the chip card detects dynamically whether (or not) one or several of the paired handsets are present in proximity thereto. In the affirmative, the chip card establishes a secure SR radio frequency communication channel with at least one of the handsets. The receiving paired handset then checks chip card identifiers and, optionally, transaction information such as transaction amount, debiting bank account, the cryptographic operation to be performed (e.g., encrypting/decrypting/signing emails or files), Windows logon, user login to e.g., web-browser, etc. The application handset uses all or part of this information to computes an authentication result and hence grant or refuse the transaction, respectively. This decisive instruction is sent back to the chip card over the still established SR communication channel in the form of the authentication response. In parallel, the transaction workflow between the chip and the reader may have moved on but the actual verification can only take place once the grant authentication result is received. For instance, if the chip card - paired handset connection is suddenly lost or waiting time exceeds a pre-defined time window, the chip card aborts the ongoing transaction. Similarly, if the chip card fails to establish a SR communication channel after transaction initialization, transaction is also aborted.

In other words, the additional strong authentication is thus based on the presence and successful detection and connection to of one or several paired handset in proximity to (or in a vicinity of) the chip card.

In a particular embodiment, the additional strong authentication is based on the presence and successful detection and connection to a single paired handset in proximity to (or in a vicinity of) the chip card while, in another embodiment, the additional strong authentication is based on the presence and successful detection and connection to several paired handsets in proximity to (or in a vicinity of) the chip card.

In a preferred embodiment, the handset application defines an active handset among the already paired ones. That is, even if multiple handsets could be listed as paired with the chip card, only one handset can be active at one time and hence used as the additional strong authentication factor. In order to change the active handset, an additional tap on the active handset with the chip card may be necessary. Advantageously, this embodiment highly increases the security and successful performance of the transaction.

The handset application may also allow blocking, disabling or unpairing paired handsets. This paired handset list can be also accessible through a logged-in website (e.g., bank or issuer website after account login).

Then, if the chip card is stolen, even if the theft knows the PIN code (e.g., by a shoulder surfing attack), he or she cannot use it because there is no paired device. Handset presence and authentication is mandatory.

In a particular embodiment, the reader can be a payment terminal or a banking terminal, preferably compliant with those currently on the market. A payment terminal can be a card reader typically deployed at merchant's premises such as a type of POS reader or e.g., a vending machine for diverse goods (e.g., fuel, beverages, and snacks). A banking terminal can be an ATM-like device for money withdrawal, account balance check, money wire transfers, cheque payment, etc. It comprises a secure structure and functions approved/standardized for EMV (Europay MasterCard Visa), which is the international standard for secure payment transactions. The POS or ATM may be provided with a chip card contact (and/or contactless) interface, a human-machine interface(s) such as a keypad, and a screen. Accordingly, in this situation, the chip card may be also compliant with the payment method (e.g., EMV).

Alternatively, the reader can be also a computer-like reader to be used with certificate-based chip cards. The computer may then be a kind of personal computer (PC) (e.g. desktop, laptop) that can embed or wire-based integrate a chip card reader to act as a PC / SC interface. Thanks to this PC / SC interface, other types of mobile computers such as smartphones, tablets and wereable electronic accesories could be used instead. Accordingly, these certificate-based chip cards can be certified according to US regulations (FIPS 140-2 Level 2 or FIPS 140-2 Level 3) and/or European regulations (CC EAL5+ / PP SSCD, and elDAS compliant). The invention also envisages the use of authentication tokens or dongles as combination of chip card (e.g., in a removable or non-removable manner) and ICC readers that support e.g., a standard Chip Card Interface Device, USB CCID, protocol. A typical example of this possible combination of chip card and ICC readers may be a FIDO USB HID device that implements e.g., a FIDO2 proprietary protocol (still compliant with FIPS and ICC certifications). As mentioned, this token or dongle may also embed or integrate the chip or another type of secure element in a non-removable manner while still performing the steps described herein as associated to the chip of the chip card.

Advantageously, the present invention does not require modifying the existing infrastructures as the reader (e.g., POS terminals, ATM, PCs) will interact with the chip card by using the standardized application protocol data unit (APDU) of ISO-compliant commands (e.g. PIN verification, ARQC generation, signing request). So, in short, the present invention proposes to add an extra layer of security by adding interactions (e.g. authentication request) with the SR communication-enabled handsets in between command request and response sent by the existing infrastructure.

Thus, in a particular embodiment, the method further comprises the steps of:
- sending, by the reader, a verification request to the interfaced chip card; and
- before sending back, by the chip card, a verification response to the reader, the chip card retrieves the authentication result from the handset in order to continue or stop the rest of the transaction.

This verification request is, in a particular embodiment, the typical passcode / PIN requested by the reader to the user and inputted through its own screen pinpad. Then, the verification request is passed to the chip card together with further information such as the inputted PIN, transaction amount, etc. for chip card side verification purposes. The verification response contains a verification result and possibly further information such as a cryptogram, etc.

In other embodiments, when the chip card is a certificate-based card for user IDentification, this verifying step by the user correctly inputting the PIN or passcode results in carrying out the desired cryptographic operation such as signing, encrypting, decrypting, etc. files.

In a particular embodiment, the authentication request sent over the established channel by the chip card to the handset comprises transaction information and a challenge. The handset computes the authentication result based on this transaction information and signs the challenge so that the authentication response sent back to the chip card comprises the authentication result and the signed challenge. The chip card can then verify the signature of the challenge.

The transaction information may contain payment amount, withdrawal amount, debiting account, type of cryptographic operation to be carried out, etc. This information can be shared directly by the transaction application of the chip card to the SR-based communication application (still in the chip card) interfacing the paired handset or, alternatively, spied by the latter. Be as it may, once received by the handset application, this can be checked against whitelisted situations and, if present, the handset automatically grants it without user intervention. The expected operations may be listed in different groups such as "white-listed", "authorization-needed", "blocked", etc. customizable by the user. Hence, depending on the transaction particulars, the user may require actively authorize it or being performed transparently (even without notifying him or her). Thus, this handset grants or denies transactions with or without end-user interactions.

Accordingly, in a particular embodiment, the handset computes the authentication result transparently to the user. Advantageously, this allows implementing a "silent authentication". Alternatively, in a particular embodiment, the method further comprises the following steps when computing the authentication result by the handset:
- the handset prompts the user with consent to perform the transaction; and
- detects whether the user has successfully given consent to perform the transaction.

The consent may be in the form of a confirmation action such as pressing a button, sliding an item on the screen, etc. Additionally, or alternatively, a biometric recognition such as facial, voice or fingerprint matching is needed. Finally, a pre-defined passcode may be also or instead entered such as thorough a conventional (fixed) pad or a scrambled pad. This passcode may be e.g., the one used during the pairing or any other post-defined by the user through the handset application. In a further embodiment, additionally or alternatively, the authentication result may be tied to verifying the identity of the user's handset (e.g. by contacting another Digital ID Wallet)

In a particular embodiment, the successfully given consent allows the handset to sign the challenge received from the chip card.

In a particular embodiment, the successful transaction is a session login which is kept valid provided the chip card is kept inserted in a computer acting as a contact reader, the method further comprising the steps of:
- polling, by the chip card, the at least one paired handset over the established SR communication channel; and
- in case no paired handset is found as a result of the polling process, aborting the transaction so that the session ends.

Advantageously, this allows implementing a "continuous authentication".

In a second inventive aspect, the invention provides a system for reinforcing the security of a conventional transaction, wherein the system comprises:
- a reader configured to
   ∘ interface contact or contactless a SR communication-enabled chip card to initiate the conventional transaction between the chip card and a reader;
- the chip card configured to
   ∘ interface contact or contactless the card reader to initiate the conventional transaction;
   ∘ establish a SR communication channel with at least one SR communication-enabled handset;
   ∘ pair with at least one of the at least one handset;
   ∘ send an authentication request to at least one of the at least one paired handsets;
   ∘ receive an authentication response from the at least one paired handset, wherein the authentication response comprises an authentication result; and
   ∘ deciding whether to continue or stop the conventional transaction with the contact reader depending on the authentication result; and
- at least one SR communication-enabled handset configured to:
   ∘ establish a SR communication channel with the chip card;
   ∘ pair with the chip card;
   ∘ receive the authentication request from the chip card over the established channel;
   ∘ compute an authentication result for granting or refusing the transaction; and
   ∘ sending back an authentication response to the chip card over the established channel.

In a third inventive aspect, the invention provides a SR communication-enabled chip card for reinforcing the security of a conventional transaction, wherein the chip card is configured to:
- interface contact or contactless a card reader to initiate the conventional transaction;
- establish a SR communication channel with at least one SR communication-enabled handset;
- pair with at least one of the at least one handset;
- send an authentication request to at least one of the at least one paired handsets in order to compute an authentication result for granting or refusing the transaction;
- receive an authentication response from the at least one paired handset, wherein the authentication response comprises the authentication result; and
- deciding whether to continue or stop the conventional transaction with the reader depending on the authentication result.

In a fourth inventive aspect, the invention provides a SR communication-enabled handset configured to:
- establish a SR communication channel with a SR communication-enabled chip card;
- pair with the chip card which has initiated a conventional transaction with a reader;
- receive an authentication request from the chip card over the established channel;
- compute an authentication result for granting or refusing the transaction; and sending back an authentication response to the chip card over the established channel in order to continue or stop, by the chip card, the conventional transaction with the reader.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figure 1: This figure depicts a system with three types of readers, a SR communication-enabled chip card and a SR communication-enabled handset according to the present invention.
- Figure 2: This figure depicts a workflow of an embodiment of the present invention where the transaction is an ATM cash withdrawal and happens transparently to the user.
- Figure 3: This figure depicts the workflow of figure 2 but requesting user's consent.

### DETAILED DESCRIPTION OF THE INVENTION

As it will be appreciated by one skilled in the art, aspects of the present invention may be embodied as a method to reinforce the security of a conventional transaction, a system 10, a SR communication-enabled chip card 1, or a SR communication-enabled handset 2.

The present invention relates to secure products and solutions where the user 8 performs a transaction by using his or her chip card (preferably inserted in the reader). During the transaction, the chip card queries or detect dynamically whether (or not) one or several on-line SR communication-enabled handsets are present in proximity to the chip card.

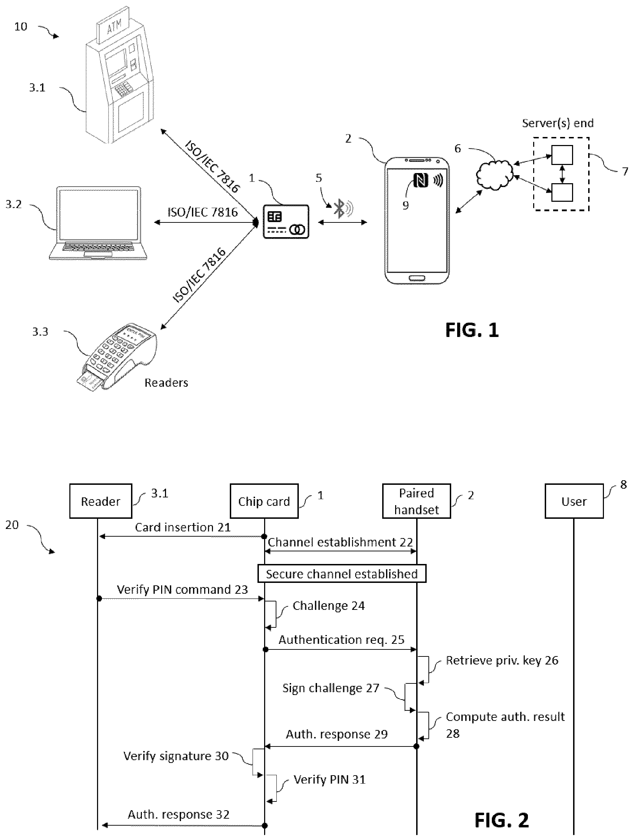

In **figure 1**, it is depicted a system 10 with three types of readers (ATM 3.1, laptop 3.2, and POS 3.3), a SR communication-enabled chip card 1 and one SR communication-enabled handset 2.

Herein under is considered an exemplary embodiment with a single handset 2 represented by a smartphone, as a user personal device for cooperating with the chip card wirelessly during the ongoing transaction. Once paired, the smartphone 2 is able to communicate with the chip card 1 through a e.g., BLE secure channel. For the pairing, the smartphone 2 uses NFC capabilities 9 to prompts the user tapping his or her chip card. At the result of the pairing, both the chip card 1 and smartphone stores certificates, public keys or identifiers (depending on the key-agreement protocol) allowing successfully establishing, stopping and re-establishment of end-to-end BLE-based secure channels 5.

The smartphone comprises a Secure Element (SE) allowing to perform the pairing and establishment of secure channels 5. This SE may be an incorporated chip, as a chip soldered (i.e., embedded Universal Integrated Circuit Card or eUICC), possibly integrated in a removable manner, or as a secure enclave (i.e., integrated Universal Integrated Circuit Card or iUICC). Therefore, the chip may therefore be fixed to or removable from its host device.

Advantageously, the SR communication-enabled handset 2 according to the invention does not need to have any particular software stack, such as e.g. a FIDO protocol stack, and/or to be configured in a dedicated or specific way. The user 8 uses his or her own smartphone 2 to launch a service enabling the "limited" communication with the chip card. As mentioned, the smartphone authentication may happen silently or transparently to the user or, instead, be needed to give his or her consent in a particular pre-defined manner.

This service can be supported by web-browser or launched thanks to an application of the handset. The latter allows to use it off-line. After logging in the service or application, the user 8 can establish different groups of transactions to fine-tune the computation of the authentication result. For instance, some transactions will be transparently authenticated by the handset without user's intervention while others will require user consent. Then, this granularity can be captured in the application where the user can map different transactions to different expected operations such as "white-listed", "authorization-needed", "blocked", etc. The application uses the transaction information received from the chip card to match it against the expected operations. For instance, if the transaction is whitelisted, it will be transparently authenticated and granted by the handset without user intervention. If it is listed as "authorization-needed", the handset will prompt the user to give his consent in the pre-defined manner. Then, even if the on-line paired handset is found in the vicinity of the chip card during the ongoing transaction, if the user fails to give his consent, the authentication result will be the denial of the transaction which will be conveyed to the chip card through the authentication response. Once received, the chip card will abort the transaction.

More sensitive operations will require higher security standards. That is, high amount withdrawals may require the strong authentication of the handset presence + fingerprint-based consent of the user.

The handset includes one or several (micro)processor(s) and/or (micro)controller(s) (not represented), as data processing means, one or several memories (not represented), as data storing means, and Input/Output (or I/O) interfaces (not represented). The processor processes data originating from and/or intended to any internal component and data originating from and/or intended to any external device through one I/O interface. The processor executes notably, besides an Operating System (or OS), the application according to the invention or a (web) type browser application.

The handset I/O interface comprises a display screen, microphone, cameras, a fingerprint reader, speakers and an (optionally) a keyboard, as an MMI, so as to interact with a user 8. The display screen(s) may be used for presenting a set of one or several SR communication-enabled handsets 2 that have been historically paired with the chip card 1 of the cardholder account as well as the settings associated to each paired (and active) handset. The handset application can also define a single "active" handset 2 among the already paired ones. As mentioned, this selection may require an additional tapping.

Once again, the settings can be accessed through other device such as a PC through a web-browser application. Hence, this information is accessible as a backend service hosted in servers 7 and the settings and devices securely stored in server databases.

The handsets, as user's devices, may communicate with the banking or chip card issuer servers 7. The communication network 6 to communicate the handset 2 with the remote server(s) 7 may include a secure communication protocol over a computer network or a mobile radio-communication network(s). Additionally or alternately, the communication network(s) 6 may include a WLAN (acronym for "Wireless Local Area Network"), an Internet and/or Intranet type network(s). For instance, the communication network 6 may be Hypertext Transfer Protocol Secure (HTTPS) over Transport Layer Security (TLS). The communication network(s) 6 may be accessed alternatively, from the handset, through a Short Range radio-communication link(s).

The MMI is further used for presenting information to the user, like e.g., a message for prompting or requesting him or her to consent the transaction according to the associated authentication mechanism (e.g., fingerprint, passcode). Then, in an embodiment, only by successfully consenting the transaction by the user (e.g., successful fingerprint matching), the handset is able to retrieve certain private keys or perform specific cryptographic operations in the computation of the authentication result that are expected by the chip card in the authentication response as a transaction grant.

Additionally, certain types of operations may require the presence of a specific handset. This can be fine-tuned in the application. Actually, only some available handsets of the user may be equipped to perform certain consent mechanism: e.g., only those equipped with fingerprint readers can perform fingerprint matching, only those with screen can display scrambled pin pads, only those with cameras can be used for facial matching, etc.

Figure 1 shows 3 different types of readers 3.1, 3.2, and 3.3 that the present invention can be used with as an example of the wide range of admissible use cases. The reader 3.1 on the top is a banking terminal compliant with those currently on the market. Particularly, reader 3.1 is an ATM typically used for money withdrawal, account balance check, money wire transfers, cheque payment, etc. and comprises a secure structure and functions approved / standardized for payment organizations e.g., EMV. Accordingly, in this situation, the chip card 1 is also compliant with the payment method e.g., EMV. That is, the personalized chip card stores at least one applet enabling the communication with the reader following the EMV standardized protocol.

Below the ATM 3.1, it is depicted a laptop 3.2 as a suitable type of computer. Today's laptops are equipped with card readers implementing PC / SC interface. This card reader can be also wirely integrated with the laptop as an external device or peripheral. In this case, the chip card 1 is a certificate-based chip card certified e.g., according to US regulations or European regulations. That is, the personalized chip card stores applets, identifiers, information and keys enabling the communication with the reader following a particular protocol. Instead of a laptop, in further embodiments, the reader can be an access control terminal or pod to certain restricted areas such as building, room, etc.

Finally, figure 1 depicts a payment terminal reader-like 3.3 typically deployed at merchant's premises such as a type of POS reader. Accordingly, in this situation, the chip card 1 is also compliant with the payment method e.g., EMV.

The ATM 3.1, computer 3.2 and POS 3.3 comprise a chip card contact (and/or contactless) interface, and man-machine interface(s) such as a keypad, a screen, to exchange information with the user. For instance, thanks to the screen, the user can be prompted to input a PIN or passcode through the keypad.

According to the present invention, the communication chip card-reader can be contact- and/or contactless-based by using the APDUs of ISO-compliant commands. Preferably, as depicted in figure 1, there is a contact-based communication between the chip card 1 and reader 3.1, 3.2, 3.3 compliant with ISO/IEC 7816. This also secures a reliable power source for the chip card to be able to wirelessly poll the paired handset(s) in the vicinity. This is important, for instance, for continuous authentication use cases where the chip card continuously polls the paired handset. Otherwise, the chip card may integrate a battery or another power source to offset the extra energy consumption of the SR communication with the paired handset.

Nevertheless, the contactless communication between chip card and reader (ISO/IEC 14443 or 18092) may suffice for silent authentication use cases where there is no need for user consent (as it is quick).

Advantageously, this synchronization between chip card contactless taping on the reader and active user consent through his or her handset may pose an additional security layer for extremely sensitive operations.

The chip card 1 also integrate electronic circuits or integrated-circuit chips. It may integrate a man-machine interface, herein in the form of a touch screen or fingerprint reader. It may integrate applications or programs that operate as applications, stored in memory in particular EEPROM or flash in order to in particular carry out banking operations, crypto operations or others. These application programs may be executed by a main processing unit µC2 or in one or more electronic circuits or electronic chips with associated integrated circuits. As mentioned, the chip card 1 integrates a function of receiving transaction information from the reader 3.1, 3.2, 3.3. It may also integrate an NFC interface in order to e.g. receive the transaction information or being paired with the handset when emitted in NFC radiofrequency mode.

To enable the SR communication with the handset, the chip card may re-use or have an additional dedicated module or application connected e.g., in parallel to the communication pads of the chip. Then, this module is configured to interface the chip card SE (or e.g. EMV app, crypto app), extract, spy or receive the necessary transaction information from the transaction in progress and communicate it to the handset 2 through the SR communication channel established 5. Hence, the chip card 1 also comprises a SR communication-enabling module (not shown) responsible for transmitting to the outside via an appropriate communication interface (not shown). Namely, this module is configured to establish an end-to-end channel with the paired handset thus encrypting conveyed info and decrypting received info over this established channel 5. The chip card 1 is arranged or configured or equipped with one or more radiofrequency communication interface(s) among Bluetooth, Bluetooth Low Energy, Wi-Fi, UHF, NFC, Li-Fi, infrared, optical to transmit or communicate said information to the handset 2. This interface may belong or be connected to a corresponding microcontroller, in particular it is BLE.

In figure 2, it is shown an exemplifying workflow of the method according to the present invention. In particular, the exemplifying transaction is a cash withdrawal through an ATM 3.1 and happens transparently to the user 8.

The method 20 reinforces the security of a conventional transaction performed by a SR communication-enabled chip card 1 already paired with at least one SR communication-enabled handset 2. Herein below, it will be considered that the SR communication is based on BLE and the handset is a smartphone. Hence, the chip card is an EMV-compliant payment card able to communicate via BLE with the smartphone when it is in proximity.

First, the user inserts 21 the chip card 1 into the ATM 3.1 hence initiating a conventional cash withdrawal. At this time or later on, when powered up, the chip card 1 surveys whether the paired (and active) smartphone 2 is on-line in its vicinity. If affirmative, a secure channel 5 is established 22 between them.

Then, the ATM 3.1 sends 23 a verification request to the contact-based interfaced chip card 1. This verification request is a verify PIN command as defined in the EMV spec. Before answering to this verify PIN command, the chip card 1 generates 24 a challenge which is sent 25 to the paired smartphone 2 over the BLE channel 5 in the form of an authentication request together with transaction information (e.g., identifying the transaction as a cash withdrawal).

The application in the smartphone 2 receives the authentication request, retrieves a private key provisioned during the enrollment or pairing and whose public part is known and stored by the chip card 1. The application uses this private key to sign 27 the challenge. Then, the authentication result is computed to check whether the ongoing transaction is "whitelisted" and, if affirmative, therefore grant it. Otherwise, the authentication result will be denying it.

Steps 26 to 28 may take place in different order as, for instance, the authentication result may be firstly computed and, based on that, certain private keys or other secrets are used to sign the challenge or perform intermediate crypto operation on the challenge.

Similarly, the authentication request may be sent by the chip card when more information about the transaction has been collected. For instance, when the amount of cash that the user desires to withdraw is known. In another example when the transaction is a POS payment, the inserted chip card can sent the amount of the purchase to the smartphone to precisely compute the authentication result and grant or refuse the transaction accordingly. Once again, all this settings can be defined e.g., with the handset application.

Referring back to the figure 2, the smartphone application sends back 29 the authentication response to the chip card over the yet open BLE channel 5. The chip card 1 then verifies 30 the signature on the challenge with the smartphone application public key (e.g., provisioned during enrollment or pairing phase). If successfully verified, the chip card 1 continues with the conventional transaction, i.e., the chip card 1 verifies 31 the PIN code originally sent by the ATM within the verify PIN command and sends back 32 a verification response.

Therefore, a successful verification response is sent 32 to the ATM if both the PIN code and signature are valid.

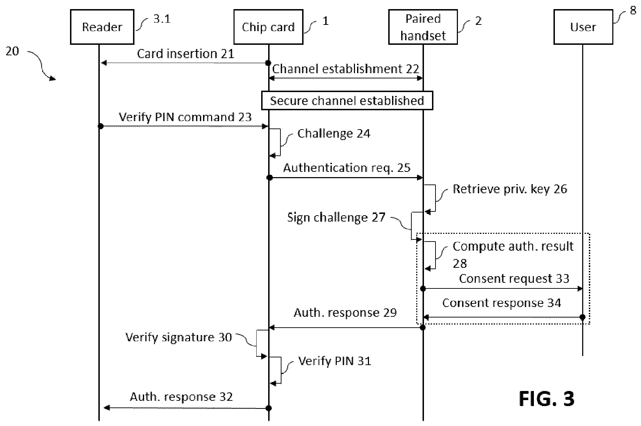

In figure 3, it is shown the same workflow as of figure 2 but further requesting user's consent. Therefore, the method 20 further comprises the following steps when computing the authentication result by the smartphone 2. The smartphone prompts 33 the user with his or her consent to perform the desired transaction. And the user perform 34 the requested consent action. The smartphone is configured to detect whether the user has successfully given his or her consent.

As mentioned, the smartphone application may compute first whether any type of consent is needed first from the user by checking the transaction details received within the authentication request. Then, the application request the user to perform the consent action in the pre-defined manner (e.g., simple confirmation action, biometric recognition, passcode input).

Preferably, the successfully given consent allows the handset to sign the challenge received from the chip card. That is, steps 28, 33 and 34 take place before step 26.

## Claims

1. Method (20) to reinforce the security of a conventional transaction performed by a Short-Range, SR, communication-enabled chip card (1), wherein the chip card is paired with at least one SR communication-enabled handset (2), the method comprising the steps of:
- initiating (21) the conventional transaction between the chip card and a reader (3.1, 3.2, 3.3);
wherein the method is **characterized in that**:
- sending (25), by the chip card, an authentication request to at least one of the at least one paired handsets over an established SR communication channel (5);
- receiving, by a paired handset, the authentication request and computing (28) an authentication result granting or refusing the transaction;
- sending (29), by the handset, an authentication response to the chip card over the established channel, the authentication response comprising the authentication result; and
- continuing or stopping (31), by the chip card, the conventional transaction with the reader depending on the authentication result.

2. Method according to claim 1, wherein the authentication request sent over the established channel (5) by the chip card (1) comprises transaction information and a challenge (24), and wherein the handset (2) computes the authentication result based on the transaction information and signs (27) the challenge so that the authentication response sent back to the chip card comprises the authentication result and the signed challenge.

3. Method according to any of claims 1 or 2, wherein the chip card (1) is configure to interface the reader (3.1, 3.2, 3.3) complying with ISO/IEC standard 7816 or ISO/IEC 14443 and/or ISO/IEC 18092.

4. The method according to any of claims 1 to 3, wherein the SR communication between the chip card (1) and the at least one handset (2) is one of the following: Bluetooth, Bluetooth Low Energy, Wi-Fi, UHF, NFC, Li-Fi.

5. The method according to any of claims 1 to 4, wherein the reader is either
- a banking terminal (3.1) such as an Automated-Teller-Machine, ATM; or
- a computer (3.2) such as a desktop, a laptop, a smartphone, a tablet, or a wearable electronic accessory (e.g., a watch, a ring, a bracelet); or
- a payment terminal (3.3) such as a Point-Of-Sale, POS, reader.

6. The method according to any of claims 1 to 5, wherein the handset (2) is either a smartphone, a tablet, or a wearable electronic accessory (e.g., a watch, a ring, a bracelet)

7. The method according to any of claims 1 to 6, further comprises the steps of:
- sending (23), by the reader, a verification request to the interfaced chip card; and
- before sending back (32), by the chip card, a verification response to the reader, the chip card retrieves the authentication result from the handset in order to continue or stop the rest of the transaction.

8. The method according to claim 2, wherein the handset (2) computes (28) the authentication result transparently to the user.

9. The method according to any of claims 1 to 7, further comprising the following steps when computing (28) the authentication result by the handset:
- the handset prompts (33) the user with consent to perform the transaction; and
- detects (34) whether the user has successfully given consent to perform the transaction.

10. The method according to claim 9, wherein the consent is at least one of the following:
- a confirmation action,
- a biometric recognition such as facial or fingerprint, or
- a password entered such as thorough a conventional pad or scrambled pad.

11. The method according to claims 2 and 10, wherein the successfully given consent allows the handset (2) to sign (27) the challenge received from the chip card (1).

12. The method according to any of the previous claims, wherein the successful transaction is a session login which is kept valid provided the chip card is kept inserted in a computer acting as a contact reader, the method further comprising the steps of:
- polling, by the chip card, the at least one paired handset over the established SR communication channel; and
- in case no paired handset is found as a result of the polling process, aborting the transaction so that the session ends.

13. A system (10) for reinforcing the security of a conventional transaction, wherein the system comprises:
- a reader (3.1, 3.2, 3.3) configured to
∘ interface contact or contactless a SR communication-enabled chip card (1) to initiate the conventional transaction between the chip card and a reader;
- the chip card (1) configured to
∘ interface contact or contactless the card reader to initiate the conventional transaction;
∘ establish a SR communication channel (9, 5) with at least one SR communication-enabled handset (2);
∘ pair with at least one of the at least one handset;
∘ send an authentication request to at least one of the at least one paired handsets;
∘ receive an authentication response from the at least one paired handset, wherein the authentication response comprises an authentication result; and
∘ deciding whether to continue or stop the conventional transaction with the contact reader depending on the authentication result; and
- at least one SR communication-enabled handset (2) configured to:
∘ establish a SR communication channel (9, 5) with the chip card;
∘ pair with the chip card;
∘ receive the authentication request from the chip card over the established channel;
∘ compute an authentication result for granting or refusing the transaction; and
∘ sending back an authentication response to the chip card over the established channel.

14. A SR communication-enabled chip card (1) for reinforcing the security of a conventional transaction, wherein the chip card is configured to:
- interface contact or contactless a card reader (3.1, 3.2, 3.3) to initiate the conventional transaction;
- establish a SR communication channel (9, 5) with at least one SR communication-enabled handset (2);
- pair with at least one of the at least one handset (5);
- send an authentication request to at least one of the at least one paired handsets in order to compute an authentication result for granting or refusing the transaction;
- receive an authentication response from the at least one paired handset, wherein the authentication response comprises the authentication result; and
- deciding whether to continue or stop the conventional transaction with the reader depending on the authentication result.

15. A SR communication-enabled handset (2) configured to:
- establish a SR communication channel (9, 5) with a SR communication-enabled chip card (1);
- pair with the chip card which has initiated a conventional transaction with a reader;
- receive an authentication request from the chip card over the established channel (5);
- compute an authentication result for granting or refusing the transaction; and
- sending back an authentication response to the chip card over the established channel in order to continue or stop, by the chip card, the conventional transaction with the reader.
